Europäisches Patentamt

European Patent Office

Office européen des brevets

(11) Publication number: **0 187 420 B1**

# EUROPEAN PATENT SPECIFICATION

(45) Date of publication of patent specification: **18.03.92**  (51) Int. Cl.⁵: **G06F 13/12**, G06F 13/36

(21) Application number: **85202101.3**

(22) Date of filing: **18.12.85**

(54) **A system for processing and transmitting information, and array for same.**

(30) Priority: **03.01.85 NL 8500005**

(43) Date of publication of application:
**16.07.86 Bulletin  86/29**

(45) Publication of the grant of the patent:
**18.03.92 Bulletin  92/12**

(84) Designated Contracting States:
**AT BE CH DE GB IT LI LU SE**

(56) References cited:
**EP-A- 0 049 159**
**EP-A- 0 119 039**
**GB-A- 2 013 452**

**ELEKTRONIK, vol. 29, no. 20, October 1980,
pages 77-81, Munich, DE; K. ZWOLL et al.:
"PDV-Bus-Steuerwerk mit Doppelprozessor"**

(73) Proprietor: **Alexpo B.V.**
**Andromedastraat 2**
**NL-5015 AV Tilburg(NL)**

(72) Inventor: **van den Dolder, Bernard**
**Welnahorst 47**
**Enschede(NL)**
Inventor: **Bennink, Herman Johan**
**Waterlaat 60**
**Kaatsheuvel(NL)**
Inventor: **de Boef, Johannes Antonie Gerardus**
**Jules Verneweg 121**
**Tilburg(NL)**
Inventor: **Böttcher, Tjeerd Walter Willem II-straat 64**
**Tilburg(NL)**

(74) Representative: **Siemens, Andreas Meinhard Ernest, Dipl.-Ing.**
**SIEMENS & CIE. Roskam 8**
**NL-4813 GZ Breda(NL)**

# Description

The present invention relates to an electronic system and array for processing information and transmitting it in two directions between different stations, composed of a number of units.

A transmission of information and of commands between ordering and executing points is already known, but a communication vice-versa and simultaneously through one communal bus is a novelty and advantageous. This is the goal of the present system, and it is realised by means of a token access ("baton-pass") technique according to the present invention. It is to be used to establish an automatic system of distribution of consumption items.

A process control by means of process controlling stations having hier-archically organized command functions is known in principle from a publication in the journal "Elektronik", Vol. 29 (1980), nr. 20, pages 77-81.

Data processing systems with a single memory and a central processing unit have been described in European Patent 0 049 159.

The subsystems of same communicate with each other by means of a-synchronously generated transfer cycles of information.

European Patent 0 119 039 describes a token access controller used to connect a host system to a network. However a plurality of transmission channels or buses is unavoidable in this array.

British Patent 2 013 452 describes another system of data exchange between a number of processors. The transmitting means relinquishes access even if a further message is awaiting transmission.

The object of the present invention is to provide an electronic information system that renders the possibility of a more efficient communication and handling.

In the present system the units comprise a local microprocessor part for handling the communication with the local environment and a communication microprocessor part for the communication with the mutual transmission channel.

An advantageous embodiment of the system according to the present invention is characterized thereby that each of the local as well as of the communication-microprocessor part comprises a proper microprocessor, a working memory of its own and a program memory of its own.

It is an advantage according to the present invention that the working storage memory of the local microprocessor part is directly accessible for the microprocessor of the communication part by means of a serial bus.

It is an advantage according to the present invention that the information between the local and the communication-microprocessor part is exchanged by means of so-called "hand-shake technique".

According to the present invention the system bus of the local microprocessor part and the system bus of the communication microprocessor part are connected to each other by means of a common memory.

The system for electronical processing and transmitting of informations in two directions between a number of different operational units according to the present invention has the following features:

Each operational unit comprises a local microprocessor part and a communication microprocessor part, the local part having a local host processing unit, connected to a local watching unit, and a buffer, a local programmable read-only memory, and a local working memory, which communicate with a common dual port random-access memory.

The buffer corresponds with the bus connector, and the communication part, which also communicates with said common dual port random access memory, has a communication programmable memory, a communication working memory, connected to a central communication processing unit, and a timer circuit.

Said communication processing unit is connected to a watching circuit and controlled by the protocol controller, which is connected to the transceiver.

The system operates as follows: The sequence, wherein the units are enabled to transmit the messages, is determined by variable command tables, which are stored in each unit, and the information between the local microprocessor part and the communication microprocessor is exchanged by means of the hand-shake technique-("baton-pass") using said tables.

The system busses of the local microprocessor part and the communication microprocessor are corresponding with each other by means of a common dual port random access memory.

The destination address of the messages is used in combination with the command field of the message.

The transmission is actually started by receiving an event from the local part of the sending unit.

The electronic array for processing operational data and transmitting such data in both directions for automatic handling between several operating units, by a data exchange with token access control and organized command functions, is characterized by one mutual transmission channel, in that each of the operating units (16,17,18) comprises a local microprocessor part (19) and a communication microprocessor part (20), the local part having a local host processing unit (1), connected to a local watchdog circuit (2) and a buffer (7), a local program read-only memory (8) and a local working memory (9), communicating with a common dual port random access memory (10), said buffer (7) corresponding with the bus connector (4), and the communication part also communicating with said dual port random access memory (10) having a communication program read-only memory (12), a communication working memory (11), connected to a central communication processing unit (5) and a timer circuit (6), said communication processing unit (5) being connected to a communication watchdog circuit (3) and being controlled by a protocol controller (13), connected to the transceiver (14), while the sequence wherein the units are enabled to transmit the data, is determined and controlled by means of variable command tables, which initially are stored in one of the units, and the destination addresses of the data are used in combination with the command fields of the data, said tables in the operational system being stored in the communication part of the sending unit, and the transmission being actually started by receiving an event message from the local part of the sending unit.

In one of the units the communication tables of all units are stored in the Read-Only-Memory (8).

At start of the system the communication parts (20) receive the communication tables for their unit.

These tables are stored in the communication working memory (11).

If a unit has to send a message an event message is sent from the local microprocessor part (19) to the communication microprocessor part (20), then the communication microprocessor part (20), enabled by the communication tables in its working memory and the event message, can start the transmission.

The present invention is explained hereinafter in detail by means of the annexed drawings.

In these drawings the following is shown:

Fig. 1 schematically represents the system according to the present invention;

Fig. 2 represents a block scheme of a unit to be used in a system according to the present invention, showing the local and the communication parts connected by the common memory.

Fig. 3 schematically represents the way in which the unit decides whether a received message is acceptable.

Fig. 4 schematically represents the transmission of a message.

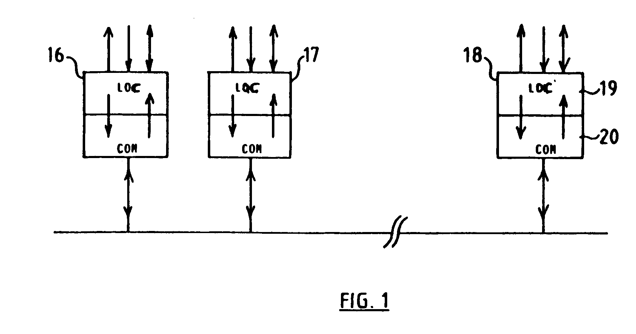

In the system according to the present invention represented in fig.1, a number of units 16,17 and 18 is represented, each having a local microprocessor part 19 and a communication microprocessor part 20. Each of the units 16,17 and 18 is connected to one serial connecting cable (transmission channel).

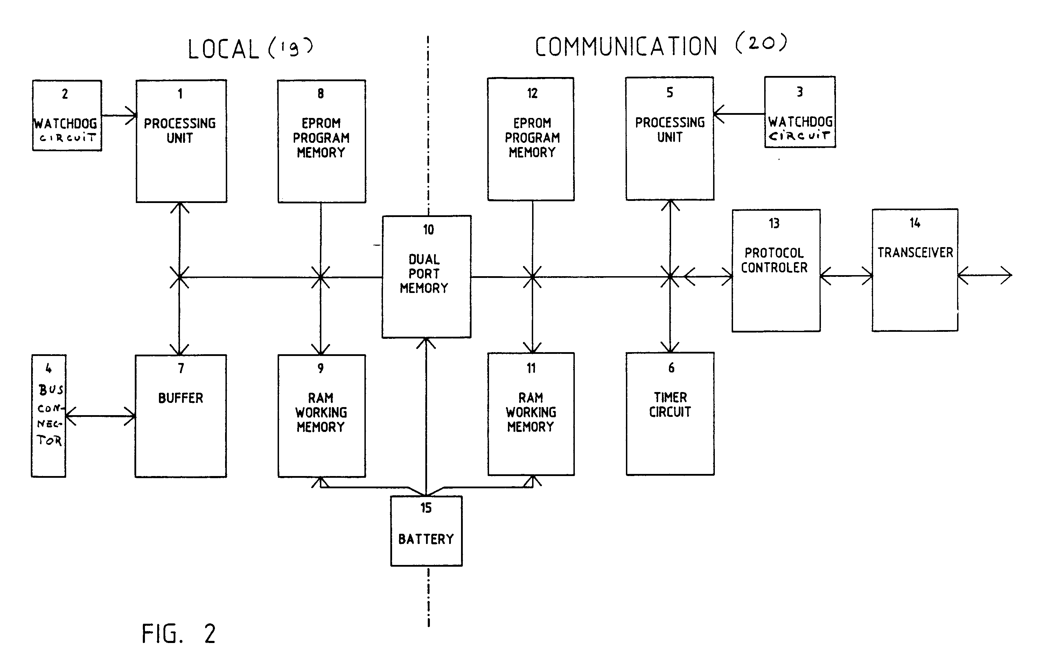

The unit according to the present invention represented in fig. 2 comprises a local microprocessor part with the components 1, 2, 4, 7, 8 and 9 and a communication microprocessor part with the components 3, 5, 6, 11, 12, 13 and 14.

Common to both parts are the components 10 and 15.

The local microprocessor part comprises a central processing unit 1 (CPU), e.g. composed of a Z80 microprocessor, a program memory 8 (PROM), consisting e.g. of 8k EPROM built with a 2764 (INTEL, NEC or equivalent), a working memory 9 (RAM), e.g. built with a μPD4464 (NEC or equivalent), a bus connector for extension, a watchdog circuit 2, and a buffer 7 for directly connecting other equipment to the local system buses (e.g. SN74LS244 and SN74LS245).

Further, there is a supply unit with a battery 15 for supplying the power needed and for maintaining the working memories under voltage, when the supply voltage is not switched on.

Chips-selects, reset mechanisms and gates circuits for generating various logic signals are not represented for clarity's sake. The central processing unit 1 controls the local part of the unit. For that purpose the program steps are fetched from the program memory 8 via the system bus, decoded and executed. The program is brought into the program memory 8, which program controls the system. The contents of the program memory 8 is non-volatile.

It is not lost if the power supply is switched off.

In the program memory 8 only reading out is possible.

No data can be introduced into the program memory 8.

The working memory 9 is connected to the system buses.

In the working memory one can write and read. The contents of the working memory 9 is changed under program control.

The communication microprocessor part comprises a Z80 microprocessor 5 as central processing unit, a program memory 12 e.g.consisting of an 8k EPROM e.g. realized by means of one unit 2764 (INTEL,NEC or equivalent), the working memory 11 (RAM), e.g. of 3 pieces of μPD4464 (NEC or equivalent), a watch dog circuit 3, a common memory (10) dual port RAM for being able to connect in a defined way the communication part and the local part to one another, and a protocol controller (Z80-SIO/2) 13 as execution of the switching circuit for the lower-level communication protocol and transceiver 14, that adapts the voltage levels of the received signals and of the signals to be transmitted and also deals with the codification of the information.

For clarity's sake, chips-selects, the detailed implementations of clock switching circuits, logic gate circuits for generating various logic signals, the reset circuit, the line trafo for the galvanic separation between the serial line and the unit, and other components are not represented in the drawing. In addition, the timer circuit is indicated with the reference number 6. The communication part deals with the data exchange between the units through the serial connecting line. Upon transmitting data from the local part, said data are fetched by the communication part from the local part, provided with a number of check words, converted from parallel to serial data and transmitted via the serial connecting line. First it is checked whether the data received via the serial connecting line have been received undistortedly (lower protocol level), and if so, they are subjected to a number of checks in order to decide if this type of message is acceptable to be received by the unit (higher protocol level). Another important task of the communication part is passing the "baton". For in order to prevent more than one unit from simultaneously setting a message on the line, the so-called "baton-pass" mechanism is applied. The functioning of said mechanism is briefly described hereinafter.

Exchanging data by the system parts between each other takes place by means of messages. These messages comprise a destination address, a source address, a command and finally an additional data field, if necessary. A unit is only allowed to send a message (to put it on line), if said unit has the baton in its possession. As there is only one baton in the whole system, only one message can be put on line at a time. After confirmation of reception the baton is passed to another unit. If there is no confirmation of reception, the message is repeated several times, whereupon the baton is passed to another unit. Passing it to a unit takes place according to a table, wherein the path of the baton is indicated. If this table is not present in the unit, the baton is passed according to a determined algorithm. Further it may happen as a result of some disturbance that either no baton at all or that more than one baton is present in the system. If no baton is present in the system, a baton will be generated after the elapse of a time-out and the communication starts again. If more than one baton is present in the system, all batons present in it are destroyed. The system has now come to a situation that no batons are present. It has already been described above how such a situation is solved. The baton-pass mechanism has to prevent data contention on the line. In addition thereto, a cyclic character check (CRC) is added to all messages on the line. This is a check word by means of which it can be checked at the receiving side whether the received message is received in an undistorted way.

As soon as a message has been proved, that its destination address corresponds with the address of the unit, the PROTOCOL CONTROLLER 13 starts gathering the message. Thereby, the serial data are converted into parallel (8 bits wide). As soon as a byte has become available, it is fetched by the communication processor 5 by means of an interrupt. The processor 5 then recovers the byte from the PROTOCOL CONTROLLER 13 and places it in its RAM memory 11 (the message is temporarily placed in the RECEIVER QUEUE by the communication processor). Parallel to the action of the processor 5, the PROTOCOL CONTROLLER 13 continues to fetch data from the line until the end of the message is detected. The processor 5 immediately fetches from the PROTOCOL CONTROLLER 13 any byte that became available. Automatically the PROTOCOL CONTROLLER 13 checks whether the fetched message is undistorted. Over the message a check word is determined which is tested at the end of the operation of reception against the check word that had been sent with the message (last 2 bytes of the message; this test is known under the name CRC-check). The result of this comparison is available to the processor.

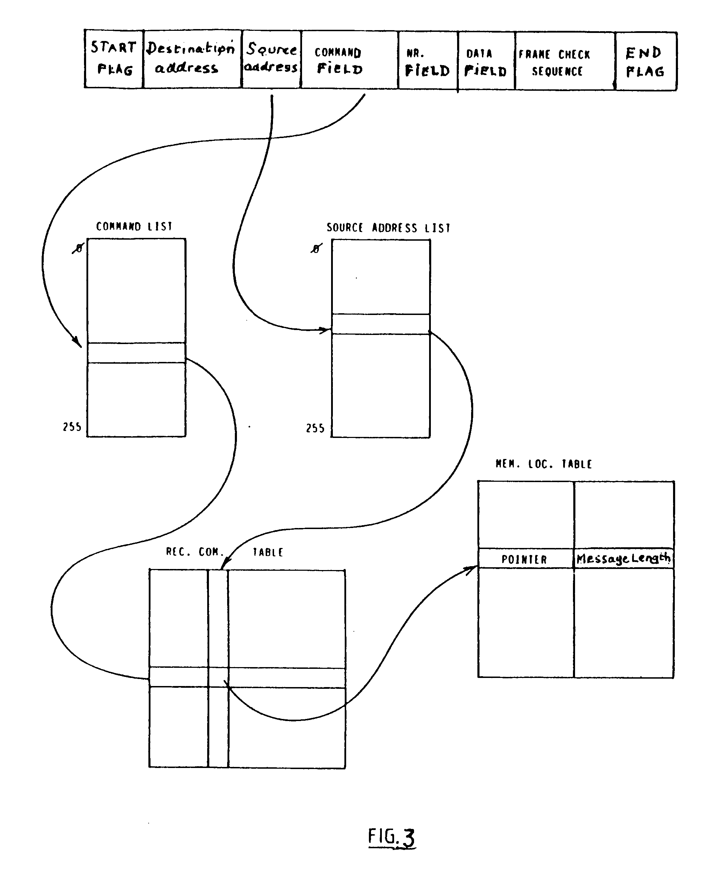

During the movement of a received message by the processor 5, the latter interprets the message and decides with the use of available data whether the received message is such, that it is allowed to be accepted by the unit. This decision is made as follows (see also fig.3).

The contents of the command field of the message is an index in the COMMAND LIST (COMMANDLIST). The contents of the COMMANDLIST is a reference to a row of the two-dimensional array RECEIVING COMMUNICATION TABLE (RECCOMTABLE). At the same time a column of the array RECOMTABLE is indicated via the SOURCE ADDRESS LIST (SALIST) and the contents of the "source address" field of the message (as index in SALIST). The row and column indicated in this way in RECCOMTABLE yield an event value that can lead to one of the following two actions:

1. The event value found is "nil". This means that the received message should not be accepted. As soon as the whole message has been accepted and no distortion has been established at reception, a negative confirmation of reception (NACK message) is sent to the transmitter of the message (i.e. the unit having the address as indicated in the source address field of the message). Next, the received message is "removed" from the RAM memory 11, i.e. from the RECEIVER QUEUE. Thereby the activity around the reception of the message is completed and scanning of the line starts again.

2. The event value found differs from "nil". This means that the unit accepts the message if it has been received, undistorted, and has the correct length. In this case the transmitter of the message obtains a positive confirmation of reception (ACK message). The message is maintained in the RECEIVER QUEUE. Scanning of the line as to new messages is again continued. Thereupon, the communication processor 5 tries to further transmit messages from this queue as rapidly as possible. For that purpose the event value already determined for the received message is used as index in the RECEIVING MEMORY LOCATION TABLE (RECHEMLOCTABLE). This table is filled up from the local part at the start-up of the unit and it contains the following data per event-value:

A memory pointer. This pointer indicates at which address in the memory the message has to be placed finally. This pointer value is an indication for the communication processor, for which unit part (either communication or local) the message is destined. In fact the pointer to a location in the common RAM memory 10 addresses 2000H-8000H).

Message length. This information is co-determining a correct representation of a received message (see above).

If the message is destined for the local part, the event value is offered to the local part via the common memory 10. This is to be considered as a REQUEST which is answered from the local part by consent or by a rejection. In the latter case, the message remains in the queue until a later point of time. The communication processor 5 withdraws its REQUEST, followed by a withdrawal of the rejection by the local processor 1. In the case of a consent the communication processor 5 starts the transport of the message to the RAM memory 10, as is indicated by the pointer from the RECMEMLOCTABLE. The transport between the local part and the communication part occurs via the common memory 10. As soon as the transport has been finished, the communication processor 5 withdraws its REQUEST for indicating that the message has been transmitted. The local processor 1 answers this by withdrawing its consent. Hereby the reception of the message from the line is completed and the local processor 1 can process the message.

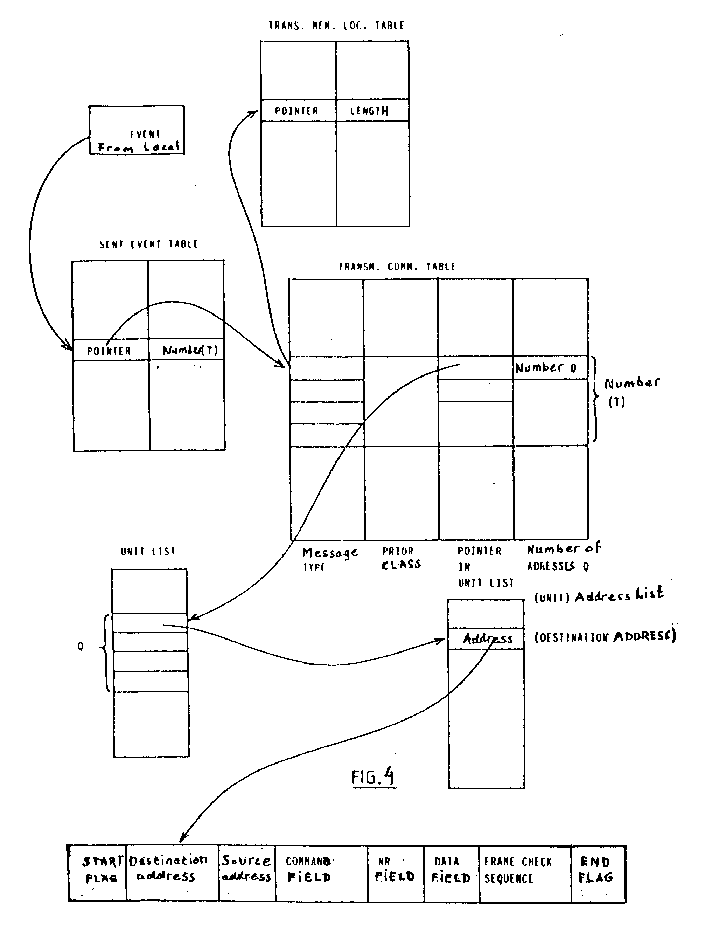

Finally, the data upon the reception of messages may be distorted from the line, e.g. as a result of interferences on the line. As there is no certainty, neither in this case, on the rightness of the address of destination, the message is removed from the RECEIVING QUEUE. No confirmation of reception takes place (neither ACK nor NACK message). The transmitter will repeat the message after timing-out. This is handled just as a normal message, as has been described above. When a message is transmitted, a similar procedure takes place as that with messages being received (see fig.4). The local processor 1 offers to the communication processor 5 an event value via the common memory 10 after it has prepared the correct message(s) at the correct memory locations. This is to be regarded as a transmission-request, but now starting from the local part. This REQUEST is answered from the communication part with a confirmation (the message can still be placed in a TRANSMIT QUEUE or with a rejection (no more space available in the RAM memory 11 of the communication part).

In the case of a rejection, the REQUEST and the rejection are withdrawn again and the local processor 1 takes the necessary actions. In the case of a confirmation the communication processor 5 fetches the message(s) from the common memory (RAM 10) between the local- and the communication part to its own RAM 11 and places it in the right TRANSMIT QUEUE(S) corresponding with the priority class(es) belonging to that (those) message(s).

Every priority class has its own TRANSMIT QUEUE. After these transports have been executed, confirmation and REQUEST are withdrawn again for indicating that the message(s) has (have) been taken away. For the local processor 1 this is identical with the information that the message(s) has (have) been transmitted. The actual transmission over the line is the complete responsability of the communication part.

The determination of the number of messages and their RAM location(s) is accomplished by the communication processor as follows.

The event value received from the local part is an index in the SEND EVENT TABLE (SENDEVENTTABLE).

This table contains a pointer and a "number of messages" for each event The pointer is an index in the TRANSMITTING COMMUNICATION TABLE (TRANSCOMPTABLE). This table contains per index the following 4 elements:

1. Type of message. This is an index in the TRANSMITTING MEMORY LOCATION TABLE (TRANSMMEMLOCTABLE). This table is initialized by the local part at the start-up of the unit. The table contains per index:

a. A memory pointer. This pointer indicates where in the memory the message (at least the data-field of the message) is stored. From this location on, the message is moved to the correct TRANSMIT QUEUE.

b. Message length. This is the number of bytes to be moved.

2. Priority class. This is the priority of the message and it is determining for the TRANSMIT QUEUE to be selected.

3. Unit List pointer. This is an index in the UNIT LIST (UNITLIST), of which the contents again refer to an index in the ADDRESS LIST (ADRLIST). This ADRLIST contains the final unit-address which forms the destination address for the message.

4. Unit number. This value indicates to how many units the message (ensueing from the Message Type element) has to be transmitted. It is the number of successive elements which are to be fetched up from the UNITLIST, starting at the index ensueing from the Unit-List-pointer element.

The "Number of Messages" indicates how many message types have to be sent as a result of the event value. This number corresponds with the number of indexes that have to be selected from the TRANSMCOMTABLE, starting at that index as is indicated by the pointer from the SENDEVENTTABLE.

The organisation of the TRANSMIT QUEUE's has been made in such a way that for each priority class a message is fetched up in a QUEUE at most once. From these QUEUE's the messages, provided with the Source address and the destination address, are transmitted on the line. The communication part is waiting until it obtains the BATON offered by another unit. If so, and if not all QUEUE's are empty, the eldest message from the highest priority class is transmitted. After receipt of a message of confirmation or if exceeding the maximum number of times a message may be repeated, the BATON is passed to another unit. This occurs also if all TRANSMIT QUEUE's are empty. If a message is not accepted or replied by the receiver with a negative confirmation of reception, the message may remain in a QUEUE depending on the priority class. The local part is informed thereof.

This is the treatment of data-exchange via the transmission line. The treatment of the second category of data-exchange is as follows.

Data-exchange via the bus connector 4 entirely occurs under control of the local processor. There may be I/O-gates defined as input or output. The input can therein be fetched in as polling- or interrupt-mode, depending on the programmed mode of the ports. In fact, the control software of the local processor 1 determines the actions on the obtained input, which can result in outputs on certain lines. Obtained inputs may give rise to the transmission of determined messages as discussed hereinbefore. Inputs to the local processor 1 and from there occasionally can be moved to the local RAM memory 9. Outputs come from the local processor 1, which occasionally has collected them from the local RAM memory 9.

Further it will be discussed how the local and the communication part exchange the needed information. In the foregoing we have already seen that this occurs via the common RAM 10. For each Z80-PIO one byte is reserved in the common memory. Upon such a byte a port is designed, and one processor recognizes this as an input port and the other as an output port. The ports are regularly read to establish alterations. If an alteration takes place at the input-port, an interrupt is started up by the corresponding processor. The latter then processes the new input in the activated handling routine.

Both processors give each other via these logic ports the information which is of one of the following types:

1. Commands. Commands to execute one or more actions, except the transmission of messages.

2. Status. The transmission of status information.

3. Event. The reporting of a received message (from communication to local) and the command to transmit messages (from local to communication) respectively.

Confirmation of the received information occurs explicitly by giving a confirmation message, or implicitly by withdrawing the information given.

The information which is transmitted has a length of 1 byte. This is amply sufficient for most applications. If the information requires more bytes, all the information is first stored in the local RAM memory 9, whereupon pointer information is presented via the common memory 10. Thus the final information transfer in this case takes place via the common RAM memory 10.

The following is an explanation of the manner in which the communication processor 5 can operate in the RAM memory 9 of the local part. The design of the system has been selected in such a way that the communication processor 5 can get access to the common memory 10 and to each RAM- Location. Thus it ensues therefrom that only the local program-ROM's can be accessed exclusively by the local processor 1. Furthermore, the interrupt-buses are also completely separated so that interrupts are serviced only on that processor, to which the interrupt is connected.

At the event when the communication processor 5 wants to operate on the common memory or on the memory of the local part, the means between the local and communication parts are enabled, so that then both system parts are being connected to one another. As soon as the communication processor 5 has finished the activities in the local part, the common memory 10 between local and communication parts will be disabled. Both system parts are then again separated from one another and the local processor 1 continues its own program with the instruction at which it had been interrupted.

The array is especially but not exclusively appropriate and useful for the automation of distribution centres, petrol stations, supermarkets, stores and the like.

## Claims

1. An electronic array for processing operational data and transmitting such data in both directions for automatic handling between several operating units by a data exchange with token access control and organized command functions,
characterized by one mutual transmission channel, in that each of the operating units (16,17,18) comprises a local microprocessor part (19) and a communication microprocessor part (20), the local part having a local host processing unit (1), connected to a local watchdog circuit (2) and a buffer (7), a local program read-only memory (8) and a local working memory (9), communicating with a common dual port random access memory (10), said buffer (7) corresponding with the bus connector (4), and the communication part also communicating with said dual port random access memory (10) having a communication program read-only memory (12), a communication working memory (11), connected to a central communication processing unit (5) and a timer circuit (6), said communication processing unit (5) being connected to a communication watchdog circuit (3) and being controlled by a protocol controller (13), connected to the transceiver (14), while the sequence, wherein the units are enabled to transmit the data, is determined and controlled by means of variable command tables, which initially are stored in one of the units, and the destination addresses of the data are used in combination with the command fields of the data, said tables in the operational system being stored in the communication part of the sending unit, and the transmission being actually started by receiving an event message from the local part of the sending unit.

## Revendications

1. Un réseau électronique pour le traitement de données d'opérations et pour le contrôle de transmission desdites données, en deux directions de marche à la transformation automatique, entre de plusieurs unités d'opération, par un échange de données avec un contrôle d'accès signalisé et ayant des fonctions de commandes organisées, caractérisé par un canal mutuel de transmissions, auquel se trouvent dans chaque unité d'opération (16,17,18) un micro-ordinateur (19) local et un microordinateur (20) communicatif, dont la section locale contient une unité (1) de traitement local, raccordé à un circuit local de surveillance (2) et à un mémoire-tampon (7), un mémoire local d'origine (8) et un mémoire local de transformation (9), en communication avec un mémoire commun à l'accès réciproque (10), ledit mémoire-tampon (7) correspondant avec le connecteur du bus (4) de prise électronique, et la partie de communication est aussi raccordée avec ledit mémoire commun à l'accès réciproque (10) avec le mémoire (12) de communication programmé d'origine, un compilateur (11) de communication, relié à l'unité centrale de traitement des communications (5) et au circuit retardateur (6), ladite unité de traitement des communications (5) raccordée à un circuit (3) de surveillance des communications et vérifiée par redondance par le combinateur (13) de la procédure, raccordé à l'émetteur-récepteur (14) et en même temps l'ordre de la transmission des données par les unités est déterminé et régularisé au moyen de tables variables de commande, qui sont enregistrées du commencement dans l'une des unités, et les adresses des destinations des données sont utilisées en combinaison avec les champs des commandes des données, lesdites tables dans le système des opérations étant enregistrées dans la section communicative de l'unité de transmission, et la transmission est commencée réellement à la réception d'un message d'action de la section locale de l'unité d'émission.

## Patentansprüche

1. Ein elektronisches Netzwerk zur Bearbeitung von Handlungsdaten und zur Uebertragung dieser Daten zwecks automatisierter Aktion zwischen mehreren Arbeitsstationen in beide Richtungen, mittels eines Datenaustausches mit einer Regelung des Eingangs durch Signalzeichen und mit programmierten Befehlsfunktionen, gekennzeichnet durch einen gemeinsamen Uebertragungskanal, wobei jede der Arbeitsstationen (16,17 18) einen Stationsmikroprozessorteil (19) und einen Uebertragungsmikroprozessorteil (20) enthält, und der Stationsteil eine örtliche zentrale Verarbeitungseinheit (1) besitzt, die an einen Ueberwachungskreis (2) und einen Puffer (7), einen ortsfesten programmiert festgelegten Datenspeicher (8) und einen ortsfesten Arbeitsspeicher (9) angeschlossen ist, verbunden mit einem gemeinschaftlichen Datenspeicher (10), der zwei Eingänge besitzt, wobei der Puffer (7) Anschluss hat an den Buskonnektor (4), und der Uebertragungsteil auch mit dem gemeinschaftlichen Datenspeicher (10), der die beiden Eingänge besitzt, verbunden ist, und dieser Uebertragungsteil einen festprogrammierten Speicher (12), einen Arbeitsspeicher (11), verbunden mit einer zentralen Bearbeitungseinheit (5), und einen Zeitschaltkreis (6) umfasst, wobei die Bearbeitungseinheit (5) mit einem Ueberwachungskreis (3) verbunden ist, und von einem Protokollregler (13) gesteuert wird, der mit einem Sender-Empfänger (14) verbunden ist, wobei die Reihenfolge, in welcher die Einheiten die Daten übertragen können, festgelegt ist und gesteuert wird durch variable Befehlstabellen, welche zuvor in eine der Einheiten eingegeben wurden, wonach die angesteuerten Datenziele in Kombination mit den Befehlsbereichen der Daten verwendet werden, indem die Befehlstabellen im Bearbeitungssystem in dem Verbindungsteil der Sendeeinheit gespeichert bleiben, und die Uebertragung sofort beginnt nach Eintreffen einer Handlungs-benachrichtigung vom ortsfesten Teil der Sende-einheit.

FIG. 1

FIG. 2

| START FLAG | Destination address | Source address | COMMAND FIELD | NR. FIELD | DATA FIELD | FRAME CHECK SEQUENCE | END FLAG |

FIG. 3

11

TRANS. MEM. LOC. TABLE

| POINTER | LENGTH |
|---------|--------|

EVENT
From Local

SENT EVENT TABLE

TRANSM. COMM. TABLE

| POINTER | Number (T) |
|---------|------------|

Number Q

Number (T)

| Message TYPE | PRIOR CLASS | POINTER IN UNIT LIST | Number of ADRESSES Q |

UNIT LIST

Q

(UNIT) Address List

Address    (DESTINATION ADDRESS)

FIG. 4

| START FLAG | Destination address | Source address | COMMAND FIELD | NR FIELD | DATA FIELD | FRAME CHECK SEQUENCE | END FLAG |
|------------|---------------------|----------------|---------------|----------|------------|----------------------|----------|